# EUROPÄISCHE PATENTSCHRIFT

(11) **EP 1 008 474 B1**
(45) Veröffentlichungstag und Bekanntmachung des Hinweises auf die Patenterteilung: **16.06.2004**
(21) Anmeldenummer: 99120550.1
(22) Anmeldetag: 15.10.1999
(51) Int. Cl.: B60J 1/00, B60J 1/02

(54) **Haltevorrichtung für eine Platte, insbesondere eine Fensterscheibe bei einem Kraftfahrzeug**
Holding device for a panel, in particular for a window pane in a motor vehicle
Dispositif de support pour un panneau, en particulier une vitre de fenêtre d'un véhicule à moteur

(30) Priorität: 11.12.1998 DE 19857371
(43) Veröffentlichungstag der Anmeldung: 14.06.2000
(73) Patentinhaber: TRW Automotive Electronics & Components GmbH & Co. KG, 78315 Radolfzell (DE)
(72) Erfinder: Kraus, Willibald, 67269 Grünstadt (DE)
(74) Vertreter: Schieschke, Klaus, Dipl.-Ing.

(56) Entgegenhaltungen:
- EP-A- 0 230 837
- DE-A- 4 113 844
- DE-C- 4 105 023
- US-A- 3 836 118
- US-A- 5 421 130

## Beschreibung

Die Erfindung bezieht sich auf eine Haltevorrichtung für eine Platte, insbesondere eine Fensterscheibe bei einem Kraftfahrzeug, mit mindestens einem an einem Träger, insbesondere einer Kraftfahrzeugkarosserie befestigbaren Halteteil und einem Stützbereich, welche die mit dem Träger durch Klebstoff verbundene Platte im unteren Bereich untergreift, nach dem Oberbegriff des Anspruchs 1.

Als allgemeiner Stand der Technik ist es bereits bekannt, bei der nahezu vollautomatischen Montage, insbesondere einer Frontscheibe bei einem Kraftfahrzeug, Bolzen mit Exzentern als Stützelemente einzusetzen. Diese Exzenter werden angebracht, um die vorhandenen Toleranzen der Frontscheibe auszugleichen und diese funktionssicher mit der Kraftfahrzeugkarosserie zu verbinden. Zum Toleranzausgleich ist es weiterhin bekannt, ein L-Profil einzusetzen, welches eine schräge Auflauffläche hat, wodurch ebenfalls Toleranzen der Frontscheibe ausgeglichen werden können. Weiterer Stand der Technik sind Stützelemente, welche nur geringfügig dicker als die Frontscheibe sind.

Als Stand der Technik, von dem die vorliegende Erfindung ausgeht, ist eine Haltevorrichtung mit schwenkbaren Stützelementen bekannt (DE 41 05 023 C1). Diese Haltevorrichtung wird über ein Klebeband an einer Kraftfahrzeugkarosserie befestigt und weist unterhalb der Stützflächen Stütznocken auf, welche im oberen Bereich etwa schneidenartig ausgebildet sind. Auf diesen schneidenartigen Stütznocken stützen sich die Stützflächen und damit auch die zu halternde Fensterscheibe ab. Hierbei besteht die Möglichkeit, dass über einen längeren Zeitraum und bei härteren Belastungen, wie sie in der Kraftfahrzeugindustrie im Allgemeinen üblich sind, die gesamte Vorrichtung nicht mehr funktionssicher ist.

Weiterer Stand der Technik ist eine Haltevorrichtung mit scheibenartig übereinander gelegten Stützelementen (US-A-5,421,130). Die zu halternde Fensterscheibe stützt sich auf den vorgenannten Flächen ab, welche entsprechend der Abmessung der Fensterscheibe mit Aussparungen versehen wird. Diese Konstruktion unterscheidet sich sowohl im Aufbau als auch wirkungsmäßig von den vorgenannten Konstruktionen.

Gegenüber dem vorgenannten Stand der Technik besteht die Aufgabe der vorliegenden Erfindung darin, eine Haltevorrichtung der eingangs genannten Art zu schaffen, welche bei einfachem Aufbau rascher Montage und hoher Effektivität einen sehr guten und effektiven Toleranzausgleich gewährleistet.

Diese Aufgabe wird erfindungsgemäß mit den Merkmalen im kennzeichnenden Teil des Anspruchs gelöst,

Durch die Aufteilung des Stützbereichs in einzelne, höhenmäßig gegeneinander versetzte Stützelemente ergibt sich eine rasche und einfache Montage und es ist stets gewährleistet, dass zumindest ein Stützelement vorhanden ist, welches ein Abrutschen der Frontscheibe solange verhindert, bis der Klebstoff zwischen der Kraftfahrzeugkarosserie und der Frontscheibe ausgehärtet ist.

Jedes Stützelement weist hierbei unterhalb seiner Abstützfläche eine an der Lagerplatte angeformte Stützplatte auf, unterhalb welcher sich eine Stützrippe befinden kann. Hierdurch wird eine sehr gute Lagerung der Frontscheibe und ein unerwünschtes Abrutschen während des Aushärtvorgangs des Klebstoffs vermieden.

Zur Befestigung der Haltevorrichtung an der Kraftfahrzeugkarosserie kann das Halteteil der Lagerplatte als Profilbolzen, als Halteclip, als Einschubprofil oder als Bolzenaufnahme ausgebildet sein, so dass sich eine rasche und einfache Verbindung zwischen der Haltevorrichtung und dem Träger ergibt, und zwar für alle denkbaren Befestigungsmöglichkeiten, d. h. bei runden oder rechteckigen Ausnehmungen, Langlöchern oder Profilbolzen.

Weiterhin kann jedes Stützelement eine durch die Platte beaufschlagbare Führungsfläche besitzen, welche beispielsweise schräg und/oder gewölbt ausgebildet ist. Wird nun der untere Bereich der Frontscheibe, d. h. der Platte, gegen die entsprechenden Stützelemente bewegt, so wird durch diese Führungsfläche gewährleistet, dass die jeweils nicht benötigten Stützelemente in die Ruhepositon nach oben geschwenkt werden. Hierbei kann das Gelenk zwischen dem jeweiligen Stützelement und der Lagerplatte als Filmscharnier ausgebildet sein.

Die Erfindung wird nachfolgend anhand von in der Zeichnung dargestellten Ausführungsbeispielen näher beschrieben. In der Zeichnung zeigen:
- Fig. 1: eine perspektivische Ansicht einer Haltevorrichtung;
- Fig. 2: eine Seitenansicht der Haltevorrichtung vor Beginn der Montage mit einer Platte, wobei Fig. 2a bis Fig. 2e verschiedene Gestaltungsmöglichkeiten des Halteteils zeigen:
- Fig. 3: eine Draufsicht auf die Haltevorrichtung nach Fig. 1;
- Fig. 4: eine perspektivische Ansicht einer anderen Ausführungsform der Haltevorrichtung;
- Fig. 5: eine Vorderansicht der Haltevorrichtung nach Fig. 4;
- Fig. 6: eine Draufsicht auf die Haltevorrichtung nach Fig. 4 und 5.

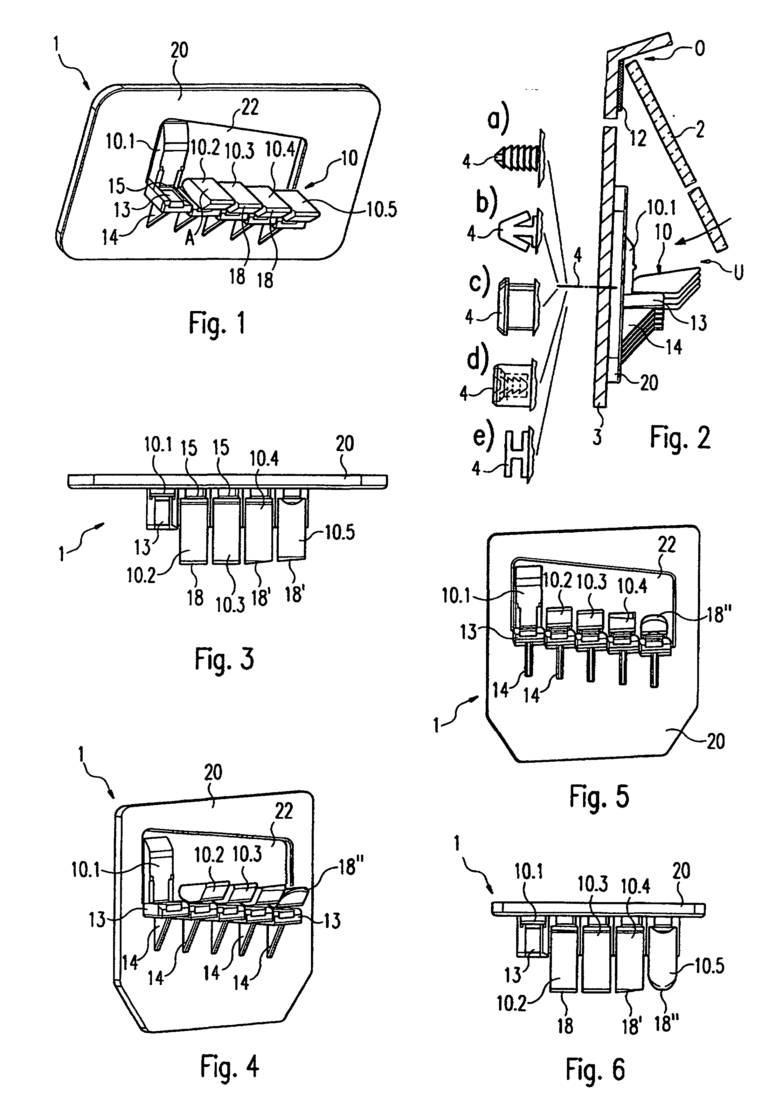

In Fig. 1 ist eine Haltevorrichtung 1 dargestellt, welche geeignet ist, gemäß Fig. 2 eine Platte 2, insbesondere beispielsweise eine Frontscheibe bei einem Kraftfahrzeug im unteren Bereich u zu untergreifen.

Diese Haltevorrichtung 1 besteht im Wesentlichen aus einer Lagerplatte 20 mit einem Stützbereich 10, welche in einzelne, höhenmäßig gegeneinander versetzte Stützelemente 10.1, 10.2, 10.3, 10.4 und 10.5 unterteilt ist. Die Lagerplatte 20 weist oberhalb dieser Stützelemente einen Fensterausschnitt 22 auf, in welchen das jeweilige Stützelement in der Ruheposition zumindest teilweise einlagerbar ist; nach Fig. 1 und 2 befindet sich das äußerste linke Stützelement 10.1 in dieser Ruheposition.

Die einzelnen Stützelemente 10.1 bis 10.5 sind jeweils über ein Gelenk 15, welches beispielsweise als Filmscharnier ausgebildet ist, an der Lagerplatte 20 befestigt.

Wie aus Fig. 1 hervorgeht, weist jedes Stützelement 10.1 bis 10.5 unterhalb seiner Abstützfläche A eine an der Lagerplatte 20 angeformte Stützplatte 13 auf, unterhalb der sich eine Stützrippe 14 befindet. Aus Fig. 1 ist darüber hinaus auch erkennbar, dass jedes Stützelement 10.1 bis 10.5 in der die Platte 2 untergreifenden Position in der Stützplatte 13 geführt ist, beispielsweise über zwei im Abstand voneinander liegende längsverlaufende Rippen.

Jedes Stützelement besitzt eine durch die Platte 2 beaufschlagbare Führungsfläche, welche beispielsweise nach Fig. 3 bei den Stützelementen 10.2 und 10.3 eben ausgebildet ist, während sie bei den Stützflächen 10.4 und 10.5 schräg verläuft.

Aus Fig. 2 geht hervor, dass an der Halteplatte 20 mindestens ein Halteteil 4 angeformt ist. Vorzugsweise können zwei Halteteile 4 Anwendung finden. Dieses Halteteil kann nach Fig. 2a als Profilbolzen oder nach Fig. 2b als Clip ausgebildet sein. Nach den Fig. 2c und 2d besteht auch die Möglichkeit, dass das Halteteil 4 als Einschubprofil oder als Aufnahmeteil für einen Bolzen gestaltet ist Gemäß Fig. 2e kann das Halteteil auch ein H-Profil besitzen, welches in eine Rechtecköffnung des Trägers 3 eingesetzt werden kann. Hierbei besteht die Möglichkeit, dass ein Schenkel des H-Profils kürzer ausgebildet ist, um von vornherein eine funktionssichere Montage in der rechteckigen Öffnung des Trägers 3 zu gewährleisten.

Ist nun über das beliebig ausgebildete Halteteil 4 nach Fig. 2 die Haltevorrichtung 1 an dem Träger 3, beispielsweise einer Kraftfahrzeugkarosserie befestigt, so wird beispielsweise vollautomatisch eine Frontscheibe 2 angeliefert und schräg an die Kraftfahrzeugkarosserie 3 herangeführt. Hierbei kommt der obere Bereich O der Frontscheibe 2 mit Klebstoff 12 in Berührung, wonach diese Frontscheibe 2 in Pfeilrichtung geschwenkt wird.

Da nach Fig. 1 die einzelnen Stützelemente 10.1 bis 10.5 höhenmäßig gegeneinander versetzt sind, ist in jedem Fall gewährleistet, dass trotz unterschiedlicher Abmessungen der Frontscheibe 2 zumindest eines der Stützelemente in der Lage ist, die Frontscheibe 2 zu untergreifen, wenn sich diese nahezu parallel zu der Kraftfahrzeugkarosserie 3 befindet. Hierdurch wird ein Abrutschen der Frontscheibe 2 solange verhindert, bis der Klebstoff 12 zwischen der Kraftfahrzeugkarosserie 3 und der Frontscheibe 2 ausgehärtet ist.

Die nicht benötigten Stützelemente wurden durch die Schwenkbewegung der Frontscheibe 2 entweder aus der Stützposition in die Ruheposition um das jeweilige Gelenk 15 nach oben geschwenkt und lagern sich zumindest teilweise in dem Fensterausschnitt 22 ein, wie beispielsweise nach Fig. 1 und 2 das Stützelement 10.1. Die übrigen Stützelemente, beispielsweise 10.4 und 10.5, welche tiefer als die Stützelemente 10.2 und 10.3 liegen, verbleiben in ihrer ursprünglichen Stützposition und erfüllen keine Funktion. Lediglich die Stützelemente 10.2 und 10.3 stützen die Frontscheibe 2 in der montierten Lage ab.

Da die Stützelemente 10.1 bis 10.5 nach Fig. 1, 3 und 6 im vorderen Bereich eine Führungsfläche 18 bzw. 18' bzw. 18" aufweisen, wird das Schwenken der Frontscheibe 2 in Pfeilrichtung nach Fig. 2 ohne Schwierigkeiten bewerkstelligt und es wird sichergestellt, dass ein Teil der nicht benötigten Stützelemente entweder nach oben schwenkt oder in seiner ursprünglichen Position verbleibt.

Durch die Aufteilung des Stützbereichs 10 in einzelne, höhenmäßig gegeneinander versetzte Stützelemente 10.1 bis 10.5 ist damit auf einfache Weise ein sehr guter Toleranzausgleich bezüglich der Abmessung der Frontscheibe 2 gewährleistet, so dass eine vollautomatische Montage bei hoher Funktionssicherheit erfolgen kann.

Das Ausführungsbeispiel nach Fig. 4 bis 6 ist ähnlich wie das nach Fig. 1 bis 3 ausgebildet, wobei jedoch lediglich das äußerste rechte Stützelement 10.5 eine gewölbte Führungsfläche 18" aufweist. Auch hier wurde eine Lage dargestellt, in welcher das äußerste linke Stützelement 10.1 in dem Fensterausschnitt 22 eingelagert ist. Weiterhin ist die Lagerplatte 20 anders gestaltet und kann nach Fig. 4 beispielsweise zwei diagonal gegenüberliegende Halteteile 4 aufweisen, welche entsprechend Fig. 2a bis Fig. 2e ausgestaltet sein können.

Durch die vorliegende Erfindung wird eine Haltevorrichtung geschaffen, welche bei rascher und funktionssicherer Montage an einem Träger, insbesondere einer Kraftfahrzeugkarosserie einen sehr guten Toleranzausgleich für eine an einem Träger zu befestigende Platte 2, beispielsweise eine Frontscheibe eines Kraftfahrzeuges gewährleistet.

## Patentansprüche

1. Haltevorrichtung (1) für eine Platte (2), insbesondere eine Fensterscheibe bei einem Kraftfahrzeug, mit mindestens einem an einem Träger (3), insbesondere einer Kraftfahrzeugkarosserie befestigbaren Halteteil (4) und einem Stützbereich (10), welcher die mit dem Träger durch Klebstoff (12) verbundene Platte im unteren Bereich (4) untergreift,
wobei der Stützbereich (10) in einzelne, höhenmäßig gegeneinander versetzte Stützelemente (10.1 - 10.5) unterteilt ist, welche jeweils über ein Gelenk (15) an einer Lagerplatte (20) befestigt sind,
wobei die Stützelemente (10.1 - 10.5) unabhängig voneinander in der die Platte (2) untergreifenden Position abgestützt und jeweils um das Gelenk (15) durch die Platte (2) in eine Ruheposition schwenkbar sind und
wobei die Lagerplatte (20) oberhalb der Stützelemente (10.1 - 10.5) einen Fensterausschnitt (22) aufweist, in welchen das jeweilige Stützelement in der Ruheposition zumindest teilweise einlagerbar ist,
**dadurch gekennzeichnet,**
**dass** jedes Stützelement (10.1 - 10.5) unterhalb seiner Abstützfläche (A) eine an der Lagerplatte (20) angeformte Stützplatte (30) aufweist und in der die Platte (2) untergreifenden Position in der Stützplatte (13) geführt ist,
**dass** sich jeweils unterhalb der Stützplatte (13) mindestens eine Stützrippe (14) befindet und
**dass** das Halteteil (4) der Lagerplatte (20) als Profilbolzen, als Halteklipp, als Einschubprofile oder als Bolzenaufnahme ausgebildet ist.

2. Vorrichtung nach Anspruch 1, wobei jedes Stützelement eine durch die Platte beaufschlagbare Führungsfläche (18; 18'; 18") aufweist, **dadurch gekennzeichnet, dass** die Führungsflächen (18; 18'; 18") schräg und/oder gewölbt ausgebildet sind.

## Claims

1. Holding device (1) for a panel (2), in particular a window in a motor vehicle, having at least one holding part (4) which can be fastened on a support (3), in particular a motor vehicle body, and a supporting region (10) which engages below the panel, which is connected to the support by adhesive (12), in the lower region (4),
the supporting region (10) being divided into individual supporting elements (10.1 - 10.5) which are offset in terms of height with respect to one another and are in each case fastened to a bearing plate (20) via a joint (15),
the supporting elements (10.1 - 10.5) being supported independently of one another in the position engaging below the panel (2) and being pivotable in each case about the joint (15) through the panel (2) into a rest position, and
the bearing plate (20) having, above the supporting elements (10.1 - 10.5), a window cutout (22) in which the particular supporting element can be at least partially embedded in the rest position,
**characterized**
**in that** each supporting element (10.1 - 10.5) has, below its supporting surface (A), a supporting plate (13) which is integrally formed on the bearing plate (20), and each supporting element, in the position in which it engages below the panel (2), is guided in the supporting plate (13),
**in that** at least one supporting rib (14) is located in each case below the supporting plate (13), and
**in that** the holding part (4) of the bearing plate (20) is designed as a profiled bolt, as a holding clip, as insertion profiles or as a bolt socket.

2. Device according to Claim 1, each supporting element having a guide surface (18; 18'; 18'') which can be acted upon by the panel, **characterized in that** the guide surfaces (18; 18'; 18'') are of oblique and/or curved design.

## Revendications

1. Dispositif (1) de fixation pour une plaque (2), notamment une vitre de fenêtre pour véhicule automobile, avec au moins un support (3), particulièrement une carrosserie de véhicule automobile, comportant au moins une pièce de retenue (4) fixée au support (3), et une partie d'appui (10), laquelle est engagée sous la plaque liée au support par un moyen adhésif (12), dans la partie inférieure (4),
dans lequel la partie d'appui (10) est subdivisée en des éléments d'appui individuels (10.1 - 10.5) décalés entre eux en hauteur et qui sont fixés chacun par l'intermédiaire d'une articulation (15) à une plaque de support (20),
dans lequel les éléments d'appui (10.1-10.5) sont disposés indépendamment les uns des autres dans une position de soutien inférieur de la plaque (2), et pivotent respectivement vers une position de repos avec la plaque (2) autour de l'articulation (15), et
dans lequel la plaque de support (20) comporte, au-dessus des éléments d'appui (10.1-10.5), une section de fenêtre (22), dans laquelle l'élément d'appui respectif est disposé au moins en partie dans la position de repos,
**caractérisé en ce**
**que** chaque élément d'appui (10.1-10.5) comporte, au-dessous de sa surface d'appui (A), une plaque d'appui formée sur la plaque de support (20) et qui est dirigée selon une position de soutien inférieure de la plaque (2),
**qu'**au moins une nervure d'appui (14) est située respectivement au-dessous de la plaque d'appui (13), et
**que** la pièce de retenue (4) de la plaque de support (20) est agencée sous la forme d'un goujon profilé, d'une pince de retenue, d'un profilé d'insertion ou d'un logement de goujon.

2. Dispositif selon la revendication 1, dans lequel chaque élément d'appui comporte une surface de guidage (18;18';18"), sollicitée par la plaque, **caractérisé en ce que** les surfaces de guidage (18; 18';18") sont formée dans une forme oblique et/ou dans une forme cintrée.
